# EUROPEAN PATENT SPECIFICATION

(11) **EP 1 899 411 B1**
(45) Date of publication and mention of the grant of the patent: **17.07.2013**
(21) Application number: 06748122.6
(22) Date of filing: 23.06.2006
(51) Int. Cl.: C08K 3/16, C08K 3/28, C08K 5/20, C08K 3/20, C08K 5/09, C08K 13/02

(54) **A COMPOSITION OF MATTER FOR DEGRADABLE ADDITIVE AND PROCESS FOR MAKING SAME**
STOFFZUSAMMENSETZUNG FÜR ABBAUBARES ADDITIV UND HERSTELLUNGSVERFAHREN DAFÜR
COMPOSITION DE MATIÈRE POUR ADDITIF DÉGRADABLE ET PROCÉDÉ DE FABRICATION

(30) Priority: 23.06.2005 MY 0502866
(43) Date of publication of application: 19.03.2008
(73) Proprietor: Dragonpak Industries (M) Sdn Bhd, Johor (MY); Pintas PTE LTD, Singapore 169876 (SG)
(72) Inventor: PENG, Chao c/o GAIN MARK TECHNOLOGY LTD., 80100 Johor Bahru, Johor (MY)
(74) Representative: KIPA AB
(86) International application number: PCT/SG2006/000172
(87) International publication number: WO 2006/137810

(56) References cited:
- US-A- 3 935 141
- US-A- 5 216 043
- US-A- 5 854 304
- US-A1- 2004 062 884
- US-A1- 2004 062 884
- NORA A ET AL: 'METALLIC SOAPS', [Online] 01 January 2005, XP002524032 DOI: 10.1002/14356007.a16_361 ISBN: 978-3-527-31097-5 ULLMANN'S ENCYCLOPEDIA OF INDUSTRIAL CHEMISTRY, WILEY-VCH VERLAG GMBH & CO. KGAA, WEINHEIM, PAGE(S) 1 - 16 Retrieved from the Internet: <URL:http://mrw.interscience.wiley.com/emrw /9783527306732/ueic/article/a16 _361/current/pdf> [retrieved on 2001-09-15]

## Description

### Field of the Invention

The present invention relates to an additive which having enhanced degradability, and more particularly, an additive to promote the degradability when exposed to sunlight and heat which added into the polyolefin polymer masterbatch at the upstream for making packaging materials. The present invention also relates to the process of making the same.

### Background of the Invention

Plastics are the recent development. They are chemically resistant, light in weight and translucent. Due to such advantages, the demand of plastics product for the use in packaging is increasing by leaps and bounds. However, plastics are not easily degradable in the nature. The increasing use of plastics has created a serious waste disposal problem. Burning of these plastics is not a satisfactory solution as well. It would result undesirable gases which contribute to air pollution.

For this reason, many degradable plastics or additive to promote the degradability of the plastics have been developed. For example, in U.S. Pat No 2,004,242,732, biodegradable plastic is being developed which comprising starch or sugar. However, the biodegradable plastic will only degrade under specific environment wherein the bacteria occur to react with the plastic. It did not degrade if it is blown into a ditch at the side of the road.

U.S. Pat No 5,854,304 discloses degradable additive package composition which comprising a metal carboxylate, an aliphatic poly hydroxy-carboxyl acids and calcium oxide (CaO).

US 2004/0062884 A1 discloses a multicomponent composition for photodegradable and biodegradable plastic articles comprising biodegradable, photodegradable, auto-oxidation catalysis components, and either a biodegradable aid component, or a non-metallic mineral.

Nora et al. (2005) Ullmann's Encyclopedia of Industrial Chemistry, Wiley-VCH Verlag GmbH & Co. KgaA pp. 1-16 provides a summary of the state of the art for metallic soaps.

However, currently, there is no additive in the market having physical properties for plant process requirement. Usually, degradable film is prepared by feeding around 1 - 3 % of degradable additive with ready polyolefin polymer at the downstream. In the present invention, a very small quantity of degradable additive, as low as 0.1 %, is sufficient to achieved optimal degradation rate, when the degradable additive is added into the polyolefin polymer at the upstream. This will reduce the cost of double handling as the physical properties of the polymer will not change much while it is added into the masterbatch of polymer instead of additive compounding which takes place through adding the additive into the ready polymer. The present invention provides a more convenient, more economic and more even distribution of degradable additive in the polymer.

The present invention of the degradable additive degrades under most condition. The sunlight radiation and oxygen will stimulate the degradation.

### Summary of the Invention

The primary object in this present invention is to provide an additive which having enhanced degradability, when exposed to sunlight and oxygen.

Another object of the invention is to provide a method for producing the degradable additive.

Other objects and advantages of the present invention will become apparent from the following descriptions, an embodiment of the present invention is disclosed.

### Detailed Description of the Preferred Embodiments

Detailed descriptions of the preferred embodiment are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

The present invention provides an additive composition which promotes degradability of the polymer when exposed to sunlight and oxygen. The present invention comprises essentiallycarboxylic acid, alkali, metal salt and fatty acid amide. Said metal from the metal salt is selected from transition metal. The carboxylic acid consists of straight hydrocarbon chain. The alkali added is sodium hydroxide. In accordance with the present invention, it further comprises fatty acid amide. In coordination with the transition metal, the fatty acid amide stimulates and increases the oxidation rate which will lead to accelerating the breaking of the polymer chain. Thus, the degradability of the polymer is increased. The fatty acid amide also contributes to the surface with better printing quality. The additive is specifically modified to be added into the polymer masterbatch at the upstream to become a ready-for-use degradable resin, and finally to be processed to desired end plastic products such as plastic bag, wrapping film, packaging sheets, planks or diaper liner, which is degradable and easily for printing.

It is to be noted that the degradable additive added into the polyolefin polymer is between 0.1 to 1.0 % by weight based on total composition of polyolefin polymers

In accordance with this invention, the degradable additive, which is being added into the polyolefin polymer, comprises carboxylic acid, alkali, metal salt from transition metal, and fatty acid amide.

The carboxylic acid, according to the present invention, consists of straight chain hydrocarbon. The suitable carboxylic acids, but not limited to, are lauric acid, stearic acid, palmitic acid, oleic acid, linoleic acid and linolenic acid. The preferred carboxylic acid of present invention is lauric acid, at 10 % to 60 % by weight based on total composition.

The present invention further comprises alkali. The alkali is preferably sodium hydroxide. The preferred amount of sodium hydroxide is 2 - 30 % by weight based on total composition of the degradable additive.

In accordance with the present invention, the examples of transition metal, but not limitation, are Titanium, Vanadium, Chromium, Manganese, Iron, Cobalt, Nickel and Copper. The preferred metal is Cobalt. The preferred metal salt is Cobalt Chloride or Cobalt Nitrate. The amount of metal salt in the composition is 5 to 60 % by weight of the total degradable additive.

This is accomplished by a fatty acid amide, which is preferred to be one or a mixture of two or three kind of fatty acid amide which consists of saturated or unsaturated fatty acid amides consisting 8 to 20 carbons. The preferred fatty acid amide is oleamide, or 9-o-octadecenamide. The fatty acid amide in coordination with the transition metal in metal salt, stimulates and increases the oxidation rate which will lead to accelerate the breaking of the polymer chain. Thus, the degradability of the polymer is increased. The fatty acid amide, preferably oleamide, also contributes to the surface with better printing quality, which is 2 - 60% % by weight based on total composition of said degradable additive.

Turning now to the objective of present invention, the degradable additive is added into the polyolefin polymer at upstream to accelerate the degradability of the polymer. The polyolefin polymer comprises polyolefin homopolymer, copolymers or blends. Examples of such polyolefin are polyethylene (PE), polypropylene (PP), ethylenepropylene copolymers and ethylene-1-butene copolymers. However, the preferred polyolefin polymers for the present invention are polyethylene (PE) and polypropylene (PP). Polyethylene as used herein, comprises, any type of polyethylene including LDPE, LLDPE, MDPE, HDPE.

The physical and chemical properties of polyolefin will not change much after adding with the present invention of degradable additive. Under the sunlight radiation or ultraviolet light and oxygen, the transition metal in degradable additive would react with the unsaturated alkyl in polyolefin to form a complex compound which is not stable. Due to its instability, the transition of electron would occur simultaneously. It will then result a free radical which stimulate the oxidation and thus accelerates the degradation by breaking the C-C bonds of the polymer to become a shorter chain of polymer. Thereafter, the process repeats itself until the polymer becomes even smaller chain, with lower molecular weight. The mechanical properties of the polymer will become weaker, the polymer will thus tend to brittle. The polymer finally disintegrates into very small particles and devoured by microorganism. The polymer is eventually being excreted as water and carbon dioxide only and adsorbed by the nature of environment.

The present invention is also concerned with the process of making the same. According to the present invention, the process of making the degradable additive comprises the steps of forming a soluble salt from carboxylic acid and alkali;
reacting said soluble salt and metal salt to form an insoluble metal carboxylate; and mixing said insoluble metal carboxylate with fatty acid amide to form said degradable additive.

In accordance with the present invention, 10 - 60 % by weight based on the total composition of degradable additive of carboxylic acid reacts with 2 -30 % by weight of alkali to form a soluble salt and water. The carboxylic acid consists of straight hydrocarbon chain. The suitable carboxylic acids, but not limited to, are lauric acid, stearic acid, palmitic acid, oleic acid, linoleic acid and linolenic acid. The preferred carboxylic acid of present invention is lauric acid.

Following the preferred procedure, alkali is added at 2 - 30 % by weight of total composition. The alkali added is preferably to be sodium hydroxide. The sodium hydroxide is prepared as solution at the concentration of 28 % w/w in advance. The sodium hydroxide solution is added into the lauric acid solution a little by a little to maintain at a temperature of 70°C. The reaction forms a soluble salt, a sodium laurate and water.

Following the preferred procedure, the soluble salt reacts with a metal salt to form an insoluble metal carboxylate and a second soluble salt. The metal from metal salt is selected from transition metal. The examples of transition metal, but not limitation, are Titanium, Vanadium, Chromium, Manganese, Iron, Cobalt, Nickel and Copper. The preferred metal is Cobalt. The preferred metal salt is Cobalt Chloride or Cobalt Nitrate, 5 - 60 % by weight of the total composition of degradable additive. The metal salt, preferably Cobalt Chloride is prepared as a solution to mix with the sodium laurate obtained from the previous step which forms an insoluble metal carboxylate, preferably cobalt laurate, and sodium chloride which is the second soluble salt in the water.
The metal carboxylate obtainable hereinbefore is insoluble and it is allowed to be crystallized. The preferred procedure after getting the insoluble metal carboxylate is a step of flushing of the unreacted components and other impurities. It is followed by a step of centrifuging to eliminate water in order to get the insoluble metal carboxylate free from water and other impurities or unreacted components. The metal carboxylate is dried at 30 to 60 °C subsequently.

The process for producing the degradable additive in this present invention further comprising mixing the insoluble metal carboxylate with a fatty acid amide, which include saturated or unsaturated fatty acid amides with 8 to 20 carbons, preferably, oleamide or 9-octadecenamide at amount of 2 - 60 % by weight of total composition of the degradable additive. The step of mixing the insoluble metal carboxylate with fatty acid amide is at the temperature of 60 -100°C.

The subsequent step after the step of mixing the insoluble metal carboxylate with fatty acid amide is mixing of 30 % w/w stearic acid. This preferred step is at the temperature of 60 - 100 °C. This is followed by extruding the degradable additive, which is the mixture of the metal carboxylate with fatty acid amide, into pellet form.

The degradable additive is then heated at temperature of 50 to 190°C and incorporated into the polyolefin polymer at the upstream in the manufacturing of ready-for-use degradable resin. The ready-for-use degradable resin is used as material to produce plastic packaging.

### Example 1

Additive - Lauric Acid, Sodium Hydroxide, Cobalt Chloride and Oleamide or 9-octadecenamide.

120 L of water is heated to 60 °C in a reaction tank. 20 kg of lauric acid is added into the reaction tank followed by adding solution of sodium hydroxide. The sodium hydroxide is prepared as solution in a pre-mix tank by adding 4.5 kg of sodium hydroxide in solid form with 16 kg water. The sodium hydroxide solution is mixed with lauric acid little by little to avoid a sudden rise of the temperature: The temperature is maintained at 70° C.

The reaction between the lauric acid with sodium hydroxide results water and a sodium laurate that is soluble

The cobalt chloride is prepared as solution by adding 1 to 50 kg of cobalt chloride in solid form with 2 to 60 kg of water. The solution is added in the reaction tank a little by little. The reaction is allowed to continue until the insoluble metal carboxylate, which is the cobalt laurate, is formed. The reaction results an insoluble metal carboxylate, the cobalt laurate, and sodium chloride, the second soluble salt.

The unreacted components, other impurities and sodium chloride are being flushed with water. Thus, the remainder is only the cobalt laurate which is insoluble in the water. The following step is centrifuging to eliminate water. It is followed by drying of the cobalt laurate at 30 to 60°C .

The cobalt laurate is mixed with fatty acid amide, preferably oleamide or 9-octadecenamide, and 30 % w/w of stearic acid. The step of mixing is at the temperature of 60 -100 °C. It is followed by extruding of the mixture into pellet form.

The degradable additive obtainable, which is the mixture in pellet form, is ready to be mixed with polyolefin polymer at the upstream to become a ready-for-use degradable resin. The degradable additive can also be used to blend with ready polyolefin polymer at the downstream with slight adjustment.

### Example 2

A batch of degradable polyethylene bags and a separate batch of non-degradable bags, as control sample were tested for the accelerated weathering test.
Following the 750 hours exposure under conditions simulating 6 months worldwide exposure, the control bags were found to have remained in tact with only slight tearing of the bags when removing from the aluminium backing plates.
The degradable bags however had torn and fallen apart during testing.
The results indicate the present invention, the degradable additive, after adding into the polyolefin polymer resin, which is the material to produce the degradable polyethylene bag, show faster degradable rate compared with the non-degradable bag.

## Claims

1. A process for making a degradable additive composition for a polyolefin polymer masterbatch, said composition comprising a carboxylic acid, an alkali, a metal salt and a fatty acid amide, the process comprising:
(a) forming a water soluble salt from a carboxylic acid and an alkali;
(b) reacting said soluble salt and a transition metal salt to form a water insoluble metal carboxylate; and
(c) mixing said water insoluble metal carboxylate with a fatty acid amide and 30 % w/w of stearic acid at a temperature of 60 - 100 °C to form said degradable additive composition wherein said carboxylic acid is lauric acid.

2. The process of claim 1 wherein said lauric acid, is 10 % to 60 % by weight based on the total composition.

3. The process of claim 1 wherein said alkali is sodium hydroxide, in particular wherein said alkali is 2 - 30 % by weight based on the total composition.

4. The process of claim 1 wherein said transition metal salt is cobalt chloride or cobalt nitrate, and is 5 % to 60 % by weight based on the total composition.

5. The process of claim 1 wherein said fatty acid amide is a saturated or unsaturated fatty acid amide with 8 to 20 carbon atoms, in particular wherein said fatty acid amide is oleamide or 9-octadecenamide, wherein said fatty acid amide and oleamide or 9-octadecenamide, respectively, is 2 % to 60 % by weight based on the total composition.

6. The process of claim 1 wherein step (a) is carried out at a temperature of 70 °C.

7. The process of claim 1 wherein said water insoluble metal carboxylate is cobalt laurate.

8. The process of claim 1, the process further comprising any one of:
(b1) flushing unreacted components and other impurities before step (c);
(b2) centrifuging, thereby eliminating water; and
(b3) drying said metal carboxylate at 30 to 60 °C before step (c).

9. The process of claim 1, the process comprising step (d), of extruding said composition of a degradable additive into pellet form.

10. A degradable additive composition for a polyolefin polymer masterbatch, said additive composition comprising cobalt laurate and 9-octadecenamide and 30 % w/w of stearic acid.

## Patentansprüche

1. Prozess zur Herstellung einer abbaubaren Additivzusammensetzung für ein Polyolefinpolymer-Masterbatch, wobei die Zusammensetzung eine Carbonsäure, ein Alkali, ein Metallsalz sowie ein Fettsäureamid umfasst, wobei der Prozess beinhaltet:
(a) Bildung eines wasserlöslichen Salzes aus einer Carbonsäure und einem Alkali;
(b) Reaktion des löslichen Salzes mit einem Übergangsmetallsalz, so dass ein wasserunlösliches Metallcarboxylat entsteht; und
(c) Vermischung des wasserunlöslichen Metallcarboxylats mit einem Fettsäureamid und 30 Gewichtsprozent Stearinsäure bei einer Temperatur von 60 - 100°C, so dass die abbaubare Additivzusammensetzung entsteht, wobei es sich bei der Carbonsäure um Laurinsäure handelt.

2. Prozess gemäß Anspruch 1, wobei die Laurinsäure 10% bis 60% des Gewichts in Bezug auf die Gesamtzusammensetzung ausmacht.

3. Prozess gemäß Anspruch 1, wobei es sich bei dem Alkali um Natriumhydroxid handelt, insbesondere wobei das Alkali 2 bis 30% des Gewichts in Bezug auf die Gesamtzusammensetzung ausmacht.

4. Prozess gemäß Anspruch 1, wobei es sich bei dem Übergangsmetallsalz um Cobaltchlorid oder Cobaltnitrat handelt, und wobei es 5% bis 60% des Gewichts in Bezug auf die Gesamtzusammensetzung ausmacht.

5. Prozess gemäß Anspruch 1, wobei es sich bei dem Fettsäureamid um ein gesättigtes oder ungesättigtes Fettsäureamid mit 8 bis 20 Kohlenstoffatomen handelt, insbesondere wobei es sich bei dem Fettsäureamid um Oleamid oder 9-Octadecenamid handelt, wobei das Fettsäureamid und Oleamid oder 9-Octadecenamid jeweils 2% bis 60% des Gewichts in Bezug auf die Gesamtzusammensetzung ausmachen.

6. Prozess gemäß Anspruch 1, wobei Schritt (a) bei einer Temperatur von 70°C durchgeführt wird.

7. Prozess gemäß Anspruch 1, wobei es sich bei dem wasserunlöslichen Metallcarboxylat um Cobaltlaurat handelt.

8. Prozess gemäß Anspruch 1, wobei der Prozess ferner einen beliebigen der folgenden [Vorgänge] umfasst:
(b1) Ausspülen der unreagierten Bestandteile sowie anderer Verunreinigungen vor Schritt (c);
(b2) Zentrifugierung, durch welche Wasser beseitigt wird; und
(b3) Trocknung des Metallcarboxylats bei 30 bis 60°C vor Schritt (c).

9. Prozess gemäß Anspruch 1, wobei der Prozess Schritt (d) umfasst, welcher das Extrudieren der Zusammensetzung eines abbaubaren Additivs zu einer Pellet-Form beinhaltet.

10. Abbaubare Additivzusammensetzung für ein Polyolefinpolymer-Masterbatch, wobei die Additivzusammensetzung Cobaltlaurat und 9-Octadecenamid sowie 30 Gewichtsprozent Stearinsäure umfasst.

## Revendications

1. Procédé de fabrication d'une composition d'additif dégradable pour un mélange maître de polymère de polyoléfine, ladite composition comprenant un acide carboxylique, un alcali, un sel métallique et un amide d'acide gras, le procédé comprenant :
(a) une formation d'un sel soluble dans l'eau à partir d'un acide carboxylique et d'un alcali ;
(b) une réaction dudit sel soluble avec un sel métallique de transition afin de former un carboxylate métallique insoluble dans l'eau ; et
(c) un mélange dudit carboxylate métallique insoluble dans l'eau avec un amide d'acide gras et 30 % m/m d'acide stéarique à une température comprise entre 60 °C et 100 °C afin de former ladite composition d'additif dégradable, où ledit acide carboxylique est un acide laurique.

2. Procédé selon la revendication 1, dans lequel ledit acide laurique présente une proportion de 10 % à 60 % en poids sur la base de la composition totale.

3. Procédé selon la revendication 1, dans lequel ledit alcali est de l'hydroxyde de sodium, en particulier dans lequel ledit alcali présente une proportion de 2 % à 30 % en poids sur la base de la composition totale.

4. Procédé selon la revendication 1, dans lequel ledit sel métallique de transition est du chlorure de cobalt ou du nitrate de cobalt, et présente une proportion de 5 % à 60 % en poids sur la base de la composition totale.

5. Procédé selon la revendication 1, dans lequel ledit amide d'acide gras est un amide d'acide gras saturé ou insaturé avec de 8 à 20 atomes de carbone, en particulier dans lequel ledit amide d'acide gras est de l'oléamide ou du 9-octadécènamide, dans lequel ledit amide d'acide gras et l'oléamide ou le 9-octadécènamide, respectivement, présentent une proportion de 2 % à 60 % en poids sur la base de la composition totale.

6. Procédé selon la revendication 1, dans lequel l'étape (a) est réalisée à une température de 70 °C.

7. Procédé selon la revendication 1, dans lequel ledit carboxylate métallique insoluble dans l'eau est du laurate de cobalt.

8. Procédé selon la revendication 1, le procédé comprenant en outre l'une quelconque des opérations suivantes :
(b1) un rinçage des composants n'ayant pas réagi et d'autres impuretés avant l'étape (c) ;
(b2) une centrifugation, permettant d'éliminer l'eau ; et
(b3) un séchage dudit carboxylate métallique à une température comprise entre 30 °C et 60 °C avant l'étape (c).

9. Procédé selon la revendication 1, le procédé comprenant l'étape (d) d'extrusion de ladite composition d'un additif dégradable en une forme de granulé.

10. Composition d'additif dégradable pour un mélange maître de polymère de polyoléfine, ladite composition d'additif comprenant du laurate de cobalt et le 9-octadécènamide et 30 % m/m d'acide stéarique.
